# EUROPÄISCHE PATENTSCHRIFT

(11) **EP 2 617 381 B1**
(45) Veröffentlichungstag und Bekanntmachung des Hinweises auf die Patenterteilung: **10.05.2017**
(21) Anmeldenummer: 13000108.4
(22) Anmeldetag: 10.01.2013
(51) Int. Cl.: A61C 1/00, A61M 1/00

(54) **Luftversorgungssystem für den medizinischen Bereich sowie Verfahren zum Betreiben eines solchen**
Air supply system for medical applications and method for operating same
Système d'alimentation en air pour le domaine médical et procédé de fonctionnement d'un tel système

(30) Priorität: 21.01.2012 DE 102012001138
(43) Veröffentlichungstag der Anmeldung: 24.07.2013
(73) Patentinhaber: Dürr Dental AG, 74321 Bietigheim-Bissingen (DE)
(72) Erfinder: Hägele, Andreas, D-71384 Weinstadt (DE)
(74) Vertreter: Schwanhäußer, Gernot

(56) Entgegenhaltungen:
- DE-A1- 4 220 006
- US-A- 4 064 630
- US-A- 5 107 899

## Beschreibung

Die Erfindung betrifft ein Luftversorgungssystem für den medizinischen Bereich mit
a) einer Druckluft-Erzeugungseinrichtung, die mit einem Leitungssystem in Verbindung steht, das für medizinische Zwecke bestimmte Luft führt, und deren Kapazität aus Sicherheitsgründen ein Mehrfaches eines nominalen Bedarfs an zu medizinischen Zwecken verwendeter Luft ist;
und
ein Verfahren zum Betreiben eines solchen.

In vielen Ländern werden für die Erzeugung von Luft, welche zur medizinischen Anwendung im Klinikbereich eingesetzt wird, mehrfach redundante Systeme gefordert. In Deutschland ist die geforderte Redundanz beispielsweise dreifach. Unter dreifacher Redundanz wird verstanden, dass die Kapazität der Druckluft-Erzeugungseinrichtung das Dreifache dessen beträgt, für was das Luftversorgungssystem in der medizinischen Anwendung ausgelegt ist.

Bei bekannten Luftversorungssystemen der eingangs genannten Art, wie in DE4220006 oder US5107899 offenbart, bleibt die Kapazität der Druckluft-Erzeugungseinrichtung weitgehend ungenutzt. Dies bedeutet, dass die Lufterzeugung mit vergleichsweise hohen Kosten verbunden ist.

Aufgabe der vorliegenden Erfindung ist es, ein Luftversorgungssystem der eingangs genannten Art und ein Verfahren zu dessen Betreiben bereitzustellen, mit denen ein kostengünstigerer Betrieb möglich ist.

Diese Aufgabe wird, was das Luftversorgungssystem angeht, dadurch gelöst, dass
b) die Druckluft-Erzeugungseinrichtung außerdem mit mindestens einem Leitungssystem in Verbindung steht, das zu einem Luftverbraucher niedrigerer Priorität führt;
c) in dem Leitungssystem, das die für medizinische Zwecke bestimmte Luft führt, eine Druck- oder Volumenstrom-empfindliche Einrichtung vorgesehen ist, welche die Strömung von Luft in dem die prioritätsniedrige Luft führenden Leitungssystem drosselt, wenn der Druck oder der Volumenstrom in dem Leitungssystem, welches die zu medizinischen Zwecken bestimmte Luft führt, unter einen bestimmten ersten Wert abfällt.

Die Erfindung nutzt also die Redundanz in der Kapazität der Druckluft-Erzeugungseinrichtung in denjenigen Zeiten, in denen sie nicht benötigt wird, dazu, einen anderen Verbraucher mit Druckluft zu beschicken. Diese Druckluft ist aber in dem Sinne prioritätsniedriger als die zu medizinischen Zwecken verwendete Luft, als ihre Drosselung oder gar Unterbrechung zu keinen ernsthaften Nachteilen beim Verbraucher führt, die Drosselung oder gar Unterbrechung also hingenommen werden kann, wenn die entsprechende Kapazität der redundanten Druckluft-Erzeugungseinrichtung z.B. aufgrund einer Störung für medizinische Zwecke benötigt wird. Um ein Beispiel zu geben: Wenn ein nominaler Bedarf an zu medizinischen Zwecken eingesetzter Luft von 500 Liter pro Minute besteht, musste bisher nach dem Stande der Technik eine Druckluft-Erzeugungseinrichtung vorgesehen werden, deren Kapazität bei 1 500 Litern pro Minute lag. Die redundante Kapazität von 1 000 Litern pro Minute blieb dabei ungenutzt. Erfindungsgemäß können nun aber die 1 000 Liter pro Minute an Kapazität, die für die medizinische Anwendung normalerweise nicht benötigt werden, für den Verbraucher niedrigerer Priorität eingesetzt werden, jedenfalls so lange, bis diese 1 000 Liter ganz oder teilweise für die medizinische Anwendung benötigt werden. Insgesamt wird auf diese Weise die Erzeugung von Druckluft sehr viel kostengünstiger.

Bei einer vorteilhaften Ausführungsform des Luftversorgungssystems wird die prioritätsniedrigere Luft einem dentalen Verbraucher zugeführt. Häufig finden sich in Kliniken oder ähnlichen Einrichtungen medizinische und dentale Verbraucher in nicht allzu großer Entfernung voneinander. Dentale Verbraucher sind typisch für solche prioritätsniedrigere Verbraucher, bei denen eine Reduzierung oder gar Unterbrechung der Druckluftversorung im Ernstfall hingenommen werden kann.

Zweckmäßigerweise umfasst die druckempfindliche Einrichtung mindestens einen Druckschalter in dem Leitungssystem, welches die für medizinische Zwecke bestimmte Luft führt, und eine von diesem direkt oder mittelbar betätigte steuerbare Drossel in dem Leitungssystem, welches die prioritätsniedrigere Luft führt. Eine "direkte" Betätigung wäre insbesondere eine solche, die rein mechanisch zwischen dem Druckschalter und der Drossel arbeitet. Eine mittelbare Betätigung würde mit elektrischen Signalen unter einer entsprechenden Steuereinrichtung arbeiten.

Besonders vorteilhaft ist, wenn die Druck- oder Volumenstrom-empfindliche Einrichtung die Strömung von Luft in dem Leitungssystem, welches die prioritätsniedrigere Luft führt, vollständig unterbindet, wenn der Druck oder der Volumenstrom auf einen zweiten bestimmten Wert abfällt, der kleiner als der erste Wert ist. Bei dieser Ausgestaltung erfolgt also die Beeinflussung der Luftzufuhr zu dem Verbraucher mit niedrigerer Priorität in zwei Stufen: Zunächst wird die Luftzufuhr nur gedrosselt und erst, wenn dies nicht ausreicht, vollständig unterbunden.

Es empfiehlt sich, dass die Druck- oder Volumenstrom-empfindliche Einrichtung ein Warnsignal erzeugt, wenn der Druck oder der Volumenstrom unter den ersten und/ oder den zweiten Wert abfällt. Dieses Warnsignal kann zum einen elektronisch verarbeitet und gespeichert werden, um so den Betrieb des Luftversorgungsystemes zu dokumentieren und eine Fehleranalyse zu ermöglichen. Zum anderen kann das Warnsignal auch in Form eines akustischen und/oder optischen Signals dem Bedienungspersonal anzeigen, dass ein Fehler vorliegt, so dass diesem Fehler abgeholfen werden kann.

Aus Sicherheitsgründen ist eine Ausführungsform der Erfindung vorteilhaft, bei welcher in dem Leitungssystem, welches die Luft niedrigerer Priorität führt, mindestens zwei in Reihe geschaltete Drossel- und/oder Absperrventile liegen. Versagt eines dieser Ventile, so bleibt trotzdem die Funktionsfähigkeit des Luftversorgungssystems erhalten.

Die oben genannte Erfindung wird, was das Verfahren angeht, dadurch gelöst, dass
a) der Druck in dem Leitungssystem, das die zu medizinischen Zwecken bestimmte Luft führt, überwacht wird;
b) solange der Druck nicht unter einen ersten, bestimmten Wert abfällt, Luft von der Druckluft-Erzeugungseinrichtung abgezweigt und zu Zwecken geringerer Priorität verwendet wird;
c) wenn der Druck unter den ersten bestimmten Wert abfällt, die Verwendung von Luft zu Zwecken geringerer Priorität gedrosselt wird.

Die Vorteile des erfindungsgemäßen Verfahrens stimmen sinngemäß mit den oben geschilderten Vorteilen des erfindungsgemäßen Luftversorgungssystemes überein. Auch die in den Ansprüchen 8 bis 10 angegebenen bevorzugten Ausgestaltungen des erfindungsgemäßen Verfahrens haben ihr Analogon in entsprechenden, oben schon diskutierten Ausführungsbeispielen des Luftversorgungssystemes.

Eine besonders erwähnenswerte Variante des erfindungsgemäßen Verfahrens zeichnet sich dadurch aus, dass die Drosselung und Unterbrechung der Strömung in dem Leitungssystem, welches die prioritätsniedrige Luft führt, erst aufgehoben wird, wenn der Druck oder der Volumenstrom in dem Leitungssystem, welches die für medizinische Zwecke bestimmte Luft führt, über den ersten Wert ansteigt und eine manuelle Freigabe erfolgt. Die manuelle Freigabe stellt sicher, dass das Luftversorgungssystem erst dann wieder in den normalen Betrieb geht, wenn sichergestellt ist, dass der Fehler vom Bedienungspersonal erkannt ist und geeignete Maßnahmen eingeleitet wurden.

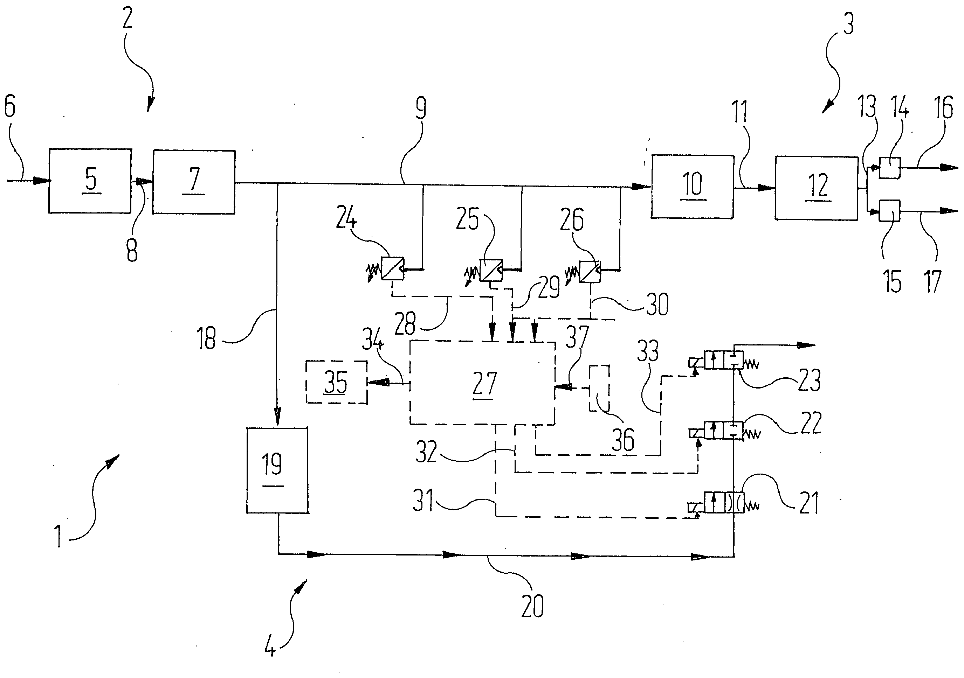

Ein Ausführungsbeispiel der Erfindung wird nachfolgend anhand der Zeichnung näher erläutert; die einzige Figur zeigt schematisch das Blockschaltbild eines Luftversorgungssystems für den medizinischen Bereich.

Das insgesamt mit dem Bezugszeichen 1 gekennzeichnete Luftversorgungssystem umfasst drei Zweige, nämlich einen Eingangszweig 2, einen Zweig 3 zur Bereitstellung von Druckluft für medizinische Zwecke, nachfolgend kurz "medizinischer Zweig" genannt, sowie einen Zweig 4, der Druckluft für einen dentalen Verbraucher erzeugt, nachfolgend kurz "dentaler Zweig" genannt. Der dentale Zweig 4 steht hier exemplarisch für einen Zweig, in dem Druckluft für Zwecke bereitgestellt wird, die eine niedrigere Priorität als die medizinischen Zwecke besitzen, die also im Notfall nachrangig mit Druckluft beliefert werden können.

Der Eingangszweig 2 umfasst diejenigen Komponenten, die für Druckluftversorgungssysteme gebräuchlich sind, nämlich eine Kompressoreinheit 5, die über eine Leitung 6 Luft aus der Atmosphäre ansaugt und beispielsweise auf 12 bar verdichtet, und eine erste Luftaufbereitungseinheit 7, welcher die Druckluft von der Kompressoreinheit 5 über eine Leitung 8 zugeführt wird. Die Kompressoreinheit 5 kann eine Mehrzahl von parallel geschalteten Kompressoren enthalten, die je nach Bedarf an Druckluft eingeschaltet werden. Die erste Aufbereitungseinheit 7 umfasst ein Filter sowie eine Wasserabscheideeinrichtung und ggf. einen Druckspeicher. Der Eingangszweig 3 stellt in der Terminologie der Ansprüche eine Druckluft-Erzeugungseinrichtung dar.

Die so konditionierte Luft wird von der ersten Aufbereitungseinheit 7 über eine Leitung 9 dem medizinischen Zweig 3 zugeführt. Sie gelang hier zunächst in eine zweite Aufbereitungseinheit 10, in welcher die Luft z. B. zweifach redundant getrocknet und mit Filtern unterschiedlicher Porengröße von Staub, Schmutz, anderen Teilchen sowie von Aerosolen befreit wird. Die Druckluft, die so für medizinische Zwecke geeignet gemacht wurde, gelangt über eine weitere Leitung 11 in eine Messeinrichtung 12, in welcher verschiedene Luftparameter, insbesondere der Systemdruck, der Taupunkt und ggf. die Konzentrationen bestimmter Gase gemessen werden. Einzelheiten hierzu sind im vorliegenden Zusammenhang nicht von Interesse.

Die Druckluft wird aus der Messeinrichtung 12 über eine sich gabelnde Leitung 13 zwei Druckminderern 14, 15 zugeführt. Die Druckminderer 14, 15 reduzieren den Systemdruck auf zwei Werte, wie diese im Allgemeinen in Kliniken oder ähnlichen Einrichtungen benötigt werden: Der Druckminderer 14 gibt auf der Leitung 16 Druckluft mit verhältnismäßig hohem Druck von beispielsweise 8 bar, der Druckminderer 15 auf der Leitung 17 Druckluft mit verhältnismäßig niedrigem Druck, beispielsweise 6 bar, ab. Auch diese Einheiten sind vorzugsweise zweifach redundant ausgebildet.

Die die erste Aufbereitungseinheit 7 verlassende Druckluft wird nicht nur über die Leitung 9 dem medizinischen Zweig 3 sondern über eine von dieser abzweigende Leitung 18 dem dentalen Zweig 4 zugeführt. Die Abzweigung an dieser Stelle vor der zweiten Aufbereitungseinrichtung 10 stellt sicher, dass die medizinischen Zwecken zugeführte Luft nicht verkeimt.

Der dentale Zweig 4 umfasst im Wesentlichen einen Druckspeicher 19, von dem eine Leitung 20 über drei motorisch, z. B. magnetisch oder durch Druckluft, betätigte Ventile 21, 22, 23 zum dentalen Verbraucher gelangt. Das Ventil 21 ist ein Drosselventil, während die Ventile 22 und 23 Absperrventile sind. Vorzugsweise werden hierzu 2/2-Wege-NC-Ventile eingesetzt, die im Ruhezustand geschlossen sind. Die Funktion dieser Ventile 21, 22, 23 wird weiter unten deutlich werden.

Der Systemdruck, also der Druck, der stromab von der ersten Aufbereitungseinheit (7) herrscht, wird durch drei Druckschalter 24, 25, 26 überwacht. Die Druckwerte, bei denen die verschiedenen Druckschalter 24, 25, 26 ansprechen, unterscheiden sich: Der Druckschalter 24 spricht bei 10 bar, die Druckschalter 25 und 26 sprechen beide etwa bei 9,5 bar an. Denkbar wäre auch, dass der Druckschalter 26 einen Ansprechdruck hat, der etwas geringer als derjenige des Druckschalters 25 ist.

Die Druckschalter 24, 25, 26 sind funktional mit den Ventilen 21, 22, 23 über eine Steuereinrichtung 27 verbunden. Die Ausgangssignale der Druckschalter 24, 25, 26, die erzeugt werden, wenn an den jeweiligen Druckschaltern 24, 25, 26 der Ansprechdruck unterschritten wird, werden über elektrische Leitungen 28, 29, 30 der Steuereinrichtung 27 zugeführt. Diese wiederum steuert die Ventile 21, 22, 23 über elektrische Leitungen 31, 32, 33 in weiter unten beschriebener Weise an. Außerdem kann die Steuereinrichtung 27 über eine Leitung 34 eine Alarmeinrichtung 35 auslösen. Schließlich ist eine Hand-Quittiereinrichtung 36 vorgesehen, welche über eine elektrische Leitung 37 ein Signal an die Steuereinrichtung 27 abgeben kann.

Die Steuereinrichtung 27 ist nunmehr so programmirt, dass die Druckschalter 24, 25, 26, die Ventile 21, 22, 23, die Alarmeinrichtung 35 und die Hand-Quittiereinrichtung 36 in folgender Weise in unterschiedlichen Betriebszuständen des Druckluft-Versorgungssystemes 1 zusammenwirken:

Ausgangspunkt der Überlegung sei ein Betriebszustand, bei dem der Systemdruck in den Leitungen 9 und 18 über dem Ansprechdruck des Druckschalters 24, beispielsweise bei 12 bar, liegt. Dies bedeutet, dass für die medizinischen Zwecke ausreichend Druckluft zur Verfügung steht, die über die Leitungen 16, 17 abgegeben werden kann. Die Ventile 21, 22, 23 sind offen und erlauben eine unbehinderte Durchströmung von Luft zum dentalen Verbraucher, der einen maximalen Luftverbrauch von weniger als 2/3 der Erzeugermenge besitzt.

Sinkt nun der Systemdruck 9 aufgrund zunehmender Druckluftentnahme, sei dies nun über den medizinischen Zweig 3 oder den dentalen Zweig 4, so wird dieser Druckabfall zunächst in der Messeinrichtung 12 festgestellt. Solange der Systemdruck noch oberhalb des Ansprechdruckes des erstens Druckschalters 24, also bei den oben genannten beispielhaften Zahlenwerten zwischen 11 und 12 bar liegt, werden zur Wiederherstellung des Systemdruckes zunächst nacheinander alle Kompressoren in der Kompressoreinheit 5 zugeschaltet.

Die Anlage ist im Beispiel so dimensioniert, dass der medizinische Zweig 3 etwa 1/3, der dentale Zweig 4 etwa 2/3 der maximal möglichen Erzeugermenge verbraucht. Liegt kein Fehlerfall in einem der beiden Zweige 3, 4 vor, ist der maximal mögliche Verbrauch kleiner als die Förderkapazität, sodass der notwendige Systemdruck aufrecht erhalten werden kann.

Steigt die Druckluftentnahme durch einen Fehler in einem der Verbraucherzweige weiter oder liegt ein Fehler in der Erzeugereinheit vor und lässt sich der hierdurch bedingte Systemdruckabfall nicht mehr in der Kompressoreinheit 5 kompensieren, so spricht bei dem schon erwähnten Druck von 9,5 bar der erste Druckschalter 24 an und gibt ein Signal an die Steuereinrichtung 27 ab. Diese wiederum schaltet die Drosselstrecke des drosselnden ersten Ventiles 21 über die elektrische Leitung 31 ein, so dass zunächst die Druckluftentnahme über dem dentalen Zweig 4 reduziert wird. Baut sich der Systemdruck in der Leitung 9 während der Drosselung wieder auf, stellt der Druckschalter 24 die Abgabe seines Signales an die Steuereinrichtung 27 ein; die Steuereinrichtung 27 bewirkt über die elektrische Leitung 31, dass der Schieber des Ventils 21 verschoben und die Durchgangsstrecke des Ventils 21, die nicht drosselt, in die Leitung 20 gebracht wird. Dieser Vorgang des Ansprechens des Druckventils 24 und des Ansteuerns des ersten Ventiles 21 kann durch Speicherung entsprechender Warnsignale dokumentiert und ggf. zur Weiterverarbeitung an eine übergeordnete Steuerung weitergegeben werden.

Baut sich der Systemdruck in der Leitung 9 auch bei Drosselung der Entnahme der dentalen Luft durch das entsprechend geschaltete Ventil 21 nicht mehr auf den erforderlichen Wert auf, sondern fällt weiter unter den Ansprechdruck der Druckschalter 25, 26, also im vorliegenden Beispiel unter 9,5 bar, ab, so legen diese Druckschalter 25, 26 über die elektrischen Leitungen 29 und 30 entsprechende Signale an die Steuereinrichtung 27. Diese veranlasst über die elektrischen Leitungen 32 und 33, dass die Ventile 22, 23 schließen. Es ist nunmehr keine Entnahme von Druckluft für dentale Zwecke mehr möglich. Gleichzeitig wird die Alarmeinrichtung 35 betätigt, sodass das Bedienpersonal auf die Störung aufmerksam gemacht wird.

Aus Sicherheitsgründen werden die Ventile 22, 23 auch dann nicht mehr automatisch geöffnet, wenn der Systemdruck in der Leitung 9 wider ansteigt und den Ansprechdruck der Druckschalter 25, 26, überschreitet. Auch bei Erreichen und Überschreiten des Ansprechdrucks des ersten Druckschalters 24, also von 10 bar, schaltet die Steuereinrichtung 27 die Ventile 21, 22, 23 nicht mehr in die Offenstellung. Dies setzt vielmehr voraus, dass durch manuelle Betätigung der Hand-Quittiereinrichtung 36 der Steuereinrichtung 27 ein Freigabesignal zugeführt wird, das dann das Öffnen der Ventile 21, 22, 23 veranlasst und so die Rückkehr in den normalen Betrieb der Druckluftversorgungseinrichtung 1 ermöglicht.

## Patentansprüche

1. Luftversorgungssystem (1) für den medizinischen Bereich mit
a) einer Druckluft-Erzeugungseinrichtung (2), die mit einem Leitungssystem (9, 11, 13) in Verbindung steht, das für medizinische Zwecke bestimmte Luft führt, und deren Kapazität aus Sicherheitsgründen ein Mehrfaches eines nominalen Bedarfs an zu medizinischen Zwecken verwendeter Luft ist;
**dadurch gekennzeichnet, dass**
b) die Druckluft-Erzeugungseinrichtung (2) außerdem mit mindestens einem Leitungssystem (18, 20) in Verbindung steht, das zu einem Luftverbraucher niedrigerer Priorität führt;
c) in dem Leitungssystem (9, 11, 13), das die für medizinische Zwecke bestimmte Luft führt, eine Druck- oder Volumenstrom-empfindliche Einrichtung (21 bis 26) vorgesehen ist, welche die Strömung von Luft in dem die prioritätsniedrigere Luft führenden Leitungssystem (18, 20) drosselt, wenn der Druck oder der Volumenstrom in der Leitung (9, 11, 13), welche die zu medizinischen Zwecken bestimmte Luft führt, unter einen bestimmten ersten Wert abfällt.

2. Luftversorgungssystem nach Anspruch 1, **dadurch gekennzeichnet, dass** die druckempfindliche Einrichtung mindestens einen Druckschalter (24, 25, 26) in dem Leitungssystem (9, 11, 13), welches die für medizinische Zwecke bestimmte Luft führt, und eine von diesem direkt oder mittelbar betätigte steuerbare Drossel (21) in dem Leitungssystem (18, 20), welches die prioritätsniedrigere Luft führt, umfasst.

3. Luftversorgungssystem nach Anspruch 2, **dadurch gekennzeichnet, dass** die Druck- oder Volumenstrom-empfindliche Einrichtung (21 bis 26) die Strömung von Luft in dem Leitungssystem (18, 20), welches die prioritätsniedrigere Luft führt, vollständig unterbindet, wenn der Druck oder der Volumenstrom auf einen zweiten bestimmten Wert abfällt, der kleiner als der erste Wert ist.

4. Luftversorgungssystem nach einem der vorhergehenden Ansprüche, **dadurch gekennzeichnet, dass** eine Alarmeinrichtung (35) vorgesehen ist, die ein Warnsignal erzeugt, wenn der Druck oder der Volumenstrom unter den ersten und/oder den zweiten Wert abfällt.

5. Luftversorgungssystem nach einem der vorhergehenden Ansprüche, **dadurch gekennzeichnet, dass** in dem Leitungssystem (18, 20), das Luft niedrigerer Priorität führt, mindestens zwei in Reihe geschaltete Drossel- und/ oder Absperrventile (21, 22, 23) liegen.

6. Verfahren zum Betreiben eines Luftversorgungssystems für medizinische Zwecke, bei dem aus Sicherheitsgründen eine Druckluft-Erzeugungseinrichtung vorgesehen ist, deren Kapazität ein Mehrfaches eines nominalen Bedarfs an zu medizinischen Zwecken benötigter Luft ist; **dadurch gekennzeichnet, dass**
a) der Druck in dem Leitungssystem (9, 11, 13), das die zu medizinischen Zwecken bestimmte Luft führt, überwacht wird;
b) solange der Druck nicht unter einen ersten, bestimmten Wert abfällt, Luft von der Druckluft-Erzeugungseinrichtung (2) abgezweigt und zu Zwecken geringerer Priorität verwendet wird;
c) wenn der Druck unter den ersten bestimmten Werten abfällt, die Verwendung von Luft zu Zwecken geringerer Priorität gedrosselt wird.

7. Verfahren nach Anspruch 6, **dadurch gekennzeichnet, dass** die prioritätsniedrigere Luft einem dentalen Verbraucher zugeführt wird.

8. Verfahren nach Anspruch 6 oder 7, **dadurch gekennzeichnet, dass** die Strömung von Luft in dem Leitungssystem (18, 20), welches die prioritätsniedrigere Luft führt, vollständig unterbrochen wird, wenn der Druck oder der Volumenstrom auf einen zweiten, bestimmten Wert abfällt, der kleiner als der erste Wert ist.

9. Verfahren nach einem der Ansprüche 6 bis 8, **dadurch gekennzeichnet, dass** ein Warnsignal erzeugt wird, wenn der Druck oder der Volumenstrom unter den ersten und/oder den zweiten Wert abfällt.

10. Verfahren nach einem der Ansprüche 6 bis 9, **dadurch gekennzeichnet, dass** die Drosselung und Unterbrechung der Strömung in dem Leitungssytem (18, 20), welches die prioritätsniedrigere Luft führt, erst aufgehoben werden, wenn der Druck oder der Volumenstrom in dem Leitungsssystem (9, 11, 13), welches die für medizinische Zwecke bestimmte Luft führt, über den ersten Wert ansteigt und zudem eine manuelle Freigabe erfolgt.

## Claims

1. Air supply system (1) for the medical sector, with
a) a compressed air generator (2), which is connected to a line system (9, 11, 13) carrying air intended for medical purposes, and of which the capacity, for safety reasons, is a multiple of a nominal requirement for air used for medical purposes,
**characterized in that**
b) the compressed air generator (2) is moreover connected to at least one line system (18, 20) that leads to a lower-priority air consumer;
c) a device (21 to 26) sensitive to pressure or volumetric flow is provided in the line system (9, 11, 13) carrying the air intended for medical purposes, which device (21 to 26) throttles the flow of air in the line system (18, 20) carrying the lower-priority air when the pressure or the volumetric flow in the line (9, 11, 13) carrying the air intended for medical purposes drops below a defined first value.

2. Air supply system according to Claim 1, **characterized in that** the pressure-sensitive device comprises at least one pressure switch (24, 25, 26) in the line system (9, 11, 13) carrying the air intended for medical purposes, and a controllable throttle (21) in the line system (18, 20) carrying the lower-priority air, which throttle (21) is directly or indirectly actuated by said at least one pressure switch (24, 25, 26).

3. Air supply system according to Claim 2, **characterized in that** the device (21 to 26) sensitive to pressure or volumetric flow completely suppresses the flow of air in the line system (18, 20) carrying the lower-priority air when the pressure or the volumetric flow drops to a second defined value, which is smaller than the first value.

4. Air supply system according to one of the preceding claims, **characterized in that** an alarm device (35) is provided which generates a warning signal when the pressure or the volumetric flow drops below the first and/or the second value.

5. Air supply system according to one of the preceding claims, **characterized in that** at least two throttle valves and/or shut-off valves (21, 22, 23), connected in series, lie in the line system (18, 20) carrying lower-priority air.

6. Method for operating an air supply system for medical purposes, in which method, for safety reasons, a compressed air generator is provided whose capacity is a multiple of a nominal requirement for air needed for medical purposes, **characterized in that**
a) the pressure in the line system (9, 11, 13) carrying the air intended for medical purposes is monitored;
b) as long as the pressure does not drop below a first defined value, air from the compressed air generator (2) branches off and is used for lower-priority purposes;
c) when the pressure drops below the first defined value, the use of air for lower-priority purposes is throttled.

7. Method according to Claim 6, **characterized in that** the lower-priority air is delivered to a dental consumer.

8. Method according to Claim 6 or 7, **characterized in that** the flow of air in the line system (18, 20) carrying the lower-priority air is completely interrupted when the pressure or the volumetric flow drops to a second defined value, which is smaller than the first value.

9. Method according to one of Claims 6 to 8, **characterized in that** a warning signal is generated when the pressure or the volumetric flow drops below the first and/or the second value.

10. Method according to one of Claims 6 to 9, **characterized in that** the throttling and interruption of the flow in the line system (18, 20) carrying the lower-priority air is not lifted until the pressure or the volumetric flow in the line system (9, 11, 13) carrying the air intended for medical purposes climbs above the first value and, in addition, a manual enable is provided.

## Revendications

1. Système d'alimentation en air (1) pour le domaine médical, comprenant
a) un dispositif de production d'air comprimé (2) qui est en communication avec un système de conduites (9, 11, 13) qui conduit de l'air destiné à des fins médicales, et dont la capacité est, pour des raisons de sécurité, un multiple d'un besoin nominal en air utilisé à des fins médicales ;
**caractérisé en ce que**
b) le dispositif de production d'air comprimé (2) est également en communication avec au moins un système de conduites (18, 20) qui conduit à un consommateur d'air de priorité moindre ;
c) dans le système de conduites (9, 11, 13) qui conduit l'air destiné à des fins médicales est prévu un dispositif sensible à la pression ou au débit volumique (21 à 26) qui limite l'écoulement d'air dans le système de conduites (18, 20) conduisant l'air de priorité moindre lorsque la pression ou le débit volumique dans la conduite (9, 11, 13) qui conduit l'air destiné à des fins médicales tombe au-dessous d'une première valeur définie.

2. Système d'alimentation en air selon la revendication 1, **caractérisé en ce que** le dispositif sensible à la pression comprend au moins un interrupteur à pression (24, 25, 26) dans le système de conduites (9, 11, 13) qui conduit l'air destiné à des fins médicales, et un limiteur de débit commandable (21) actionné directement ou indirectement par celui-ci dans le système de conduites (18, 20) qui conduit l'air de priorité moindre.

3. Système d'alimentation en air selon la revendication 2, **caractérisé en ce que** le dispositif sensible à la pression ou au débit volumique (21 à 26) empêche complètement l'écoulement d'air dans le système de conduites (18, 20) qui conduit l'air de priorité moindre lorsque la pression ou le débit volumique tombe à une deuxième valeur définie qui est plus petite que la première valeur.

4. Système d'alimentation en air selon l'une des revendications précédentes, **caractérisé en ce qu'**un dispositif d'alarme (35) est prévu, qui produit un signal d'avertissement lorsque la pression ou le débit volumique tombe au-dessous de la première et/ou de la deuxième valeur.

5. Système d'alimentation en air selon l'une des revendications précédentes, **caractérisé en ce qu'**au moins deux soupapes de limitation de débit et/ou d'arrêt (21, 22, 23) couplées en série se trouvent dans le système de conduites (18, 20) qui conduit l'air de priorité moindre.

6. Procédé de fonctionnement d'un système d'alimentation en air à des fins médicales, dans lequel, pour des raisons de sécurité, est prévu un dispositif de production d'air comprimé dont la capacité est un multiple d'un besoin nominal en air nécessaire à des fins médicales ;
**caractérisé en ce que**
a) la pression dans le système de conduites (9, 11, 13) qui conduit l'air destiné à des fins médicales est surveillée ;
b) tant que la pression ne tombe pas au-dessous d'une première valeur définie, l'air du dispositif de production d'air comprimé (2) est dérivé et utilisé à des fins de priorité moindre ;
c) lorsque la pression tombe au-dessous de la première valeur définie, l'utilisation de l'air à des fins de priorité moindre est limitée.

7. Procédé selon la revendication 6, **caractérisé en ce que** l'air de priorité moindre est amené à un consommateur dentaire.

8. Procédé selon la revendication 6 ou 7, **caractérisé en ce que** l'écoulement d'air dans le système de conduites (18, 20) qui conduit l'air de priorité moindre est complètement interrompu lorsque la pression ou le débit volumique tombe à une deuxième valeur définie qui est plus petite que la première valeur.

9. Procédé selon l'une des revendications 6 à 8, **caractérisé en ce qu'**un signal d'avertissement est produit lorsque la pression ou le débit volumique tombe au-dessous de la première et/ou de la deuxième valeur.

10. Procédé selon l'une des revendications 6 à 9, **caractérisé en ce que** la limitation et l'interruption de l'écoulement dans le système de conduites (18, 20) qui conduit l'air de priorité moindre ne sont levées que lorsque la pression ou le débit volumique dans le système de conduites (9, 11, 13) qui conduit l'air destiné à des fins médicales dépasse la première valeur et qu'en outre une validation manuelle est effectuée.
